# EUROPÄISCHE PATENTSCHRIFT

(11) **EP 3 365 650 B1**
(45) Veröffentlichungstag und Bekanntmachung des Hinweises auf die Patenterteilung: **09.08.2023**
(21) Anmeldenummer: 16770763.7
(22) Anmeldetag: 26.09.2016
(51) Int. Cl.: G01M 17/007, G01M 17/02

(54) **LAUFTROMMEL EINES REIFEN-, RAD- UND/ODER FAHRWERKSPRÜFSTANDES**
RUNNING DRUM OF A TIRE, WHEEL, AND/OR CHASSIS TEST STAND
TAMBOUR DE ROULEMENT D'UN BANC D'ESSAI DE PNEU, DE ROUE ET/OU DE MÉCANISME ROULANT

(30) Priorität: 22.10.2015 DE 102015220674
(43) Veröffentlichungstag der Anmeldung: 29.08.2018
(73) Patentinhaber: ZF Friedrichshafen AG, 88046 Friedrichshafen (DE)
(72) Erfinder: DWOLINSKI, Thomas, 94127 Neuburg am Inn (DE)
(74) Vertreter: ZF Friedrichshafen AG
(86) Internationale Anmeldenummer: PCT/EP2016/072781
(87) Internationale Veröffentlichungsnummer: WO 2017/067741

(56) Entgegenhaltungen:
- EP-A1- 2 784 469
- WO-A1-2013/101134
- DE-A1- 19 704 606
- DE-A1-102011 117 876
- DE-U1- 9 405 141
- JP-A- H0 321 844

## Beschreibung

Die Erfindung betrifft eine Lauftrommel eines Reifen-, Rad- und/oder Fahrwerksprüfstandes mit einer im Wesentlichen zylindrischen Lauffläche.

Reifenprüfstände sind bekannt, z. B. durch die DE 10 2009 002 169 A1 der Anmelderin. Ein Fahrzeugrad, d. h. ein auf einer Felge angeordneter Reifen, welcher in einer Radaufhängevorrichtung aufgenommen ist, läuft auf einer die Fahrbahn simulierenden Lauffläche, welche durch den Umfang einer rotierenden Lauftrommel gebildet wird. Die Lauftrommel ist stationär und auf einer Achse drehbar angeordnet und wird in Drehrichtung angetrieben, so dass sich Umfangsgeschwindigkeiten der Lauffläche ergeben, welche den Geschwindigkeiten des Fahrzeuges entsprechen. Die Radaufhängevorrichtung, welche einem Fahrwerk nachgebildet ist, drückt das Rad, mit relativ hohen Anpresskräften im einstelligen Tonnenbereich auf die Lauffläche der Lauftrommel. Bekannt ist, dass die Lauffläche als in Umfangsrichtung durchgehender Trommelmantel ausgebildet ist, der mit einer geeigneten Beschichtung versehen wird, um die Fahrbahneigenschaften und Reibungsverhältnisse zu simulieren. Durch den Betrieb des Prüfstandes unterliegt die Beschichtung einem Verschleiß, so dass die Beschichtung von Zeit zu Zeit erneuert werden muss. Ein der Erfindung zu Grunde liegendes Problem besteht darin, dass die Erneuerung der Beschichtung einer Lauftrommel, welche relativ groß und schwer ist, mit einem hohen Aufwand verbunden und daher auch relativ kostspielig ist. Entweder muss die komplette Lauftrommel zum Beschichter gebracht werden, oder die Beschichtung wird vom Beschichter vor Ort durchgeführt, was ebenfalls Probleme aufwirft.

Die EP 2 784 469 A1 zeigt eine Prüfstandrolle, welche aus zwei parallel zueinander angeordneten Seitenwandelementen und einem Rollenmantelelement, welches eine äußere Mantelfläche aufweist, aufgebaut ist. Die beiden Seitenwandelemente und das sich über den gesamten Umfang erstreckende Mantelelement bilden einen in sich steifen Hohlzylinder, welcher mit einer Antriebswelle verbunden ist. Das Mantelelement bildet somit ein tragendes Bauteil der Prüfstandrolle. Auf dem Mantelelement respektive dessen äußerer Mantelfläche sind Fahrbahnbelagelemente, die zylinder- oder zylindersegmentförmig ausgebildet sind, montierbar, d. h. die Fahrbahnbelagelemente werden lösbar mit dem Rollenmantelelement verbunden.

Die WO 2013/101134 offenbart ein so genanntes road wheel, welches als Lauftrommel eines Reifenprüfstandes bezeichnet werden kann. Die Lauftrommel weist eine zylindrische Form mit einer zylindrischen Außenfläche, auch Mantel genannt, auf und ist um eine Achse drehbar. Auf dem Mantel, welcher ein tragendes Bauteil der Trommel ist, werden Segmente mit einem Fahrbahnbelag befestigt, wofür im Mantel Befestigungsöffnungen vorgesehen sind.

Die JP 03021844 A zeigt ebenfalls eine in sich steife Trommel, welche aus Seitenscheiben und einem zylindrischen Mantelelement besteht. Auf dem Mantelelement, welches ein tragendes Bauteil der Trommel bildet, ist ein Fahrbahnbelag angeordnet, welcher mittels Schrauben mit dem Mantelelement verbunden ist.

Die DE 94 05 141 U1 offenbart eine Laufrolle mit einer als zylindrische Umfangsfläche ausgebildeten Lauffläche, in welcher Schlagleisten angeordnet sind. Die Laufrolle umfasst ferner Seitenscheiben, welche mit einer Antriebswelle verbunden sind. Die Lauffläche weist Vertiefungen auf, in welchen schwenkbar angeordnete Flächensegmente angeordnet sind, welche als Rampen für die Schlagleisten ausgebildet sind. Die Flächensegmente bilden kein tragendes Bauteil für die Lauftrommel.

Die DE 197 04 606 A1 zeigt eine Prüftrommel mit einer zylindrischen Manteloberfläche, welche ein tragendes Bauteil der Prüftrommel bildet. Die DE 197 04 606 A1 weist keine Segmente auf, die als Fahrbahnbelagselemente ausgebildet sind.

Die DE 10 2011 117 876 A1 offenbart zwei ineinander verschiebbare Lauftrommeln mit unterschiedlichen Fahrbahnbelägen auf dem Außenumfang. Die Lauftrommeln bestehen jeweils aus mindestens einer mit einer Nabe verbundenen Seitenscheibe und einem zylinderförmigen Mantelelement, welches fest mit der mindestens einen Seitenscheibe verbunden ist.

Eine Aufgabe der Erfindung besteht darin, den Zeit- und Kostenaufwand für die Erneuerung der Beschichtung oder des Belages der Lauffläche einer Lauftrommel möglichst gering zu halten.

Die Aufgabe der Erfindung wird durch die Merkmale des Patentanspruches 1 gelöst. Vorteilhafte Ausgestaltungen ergeben sich aus den Unteransprüchen.

Erfindungsgemäß ist vorgesehen, dass die Lauffläche aus einer Vielzahl von Segmenten zusammengesetzt ist, welche jeweils direkt auf dem Umfang der Seitenscheiben befestigt sind. Im Unterschied zum bekannten Stand der Technik weist die erfindungsgemäße Lauftrommel somit keinen durchgehenden, als separates Teil ausgebildeten Trommelmantel auf, auf welchem die Beschichtung angeordnet wird, sondern eine in Umfangsrichtung "segmentierte" Lauffläche. Der Vorteil dieser "Segmentierung" besteht darin, dass die lösbar angebrachten Segmente für eine Erneuerung der Beschichtung einzeln demontiert und entweder zum Beschichter gebracht, dort beschichtet werden oder vor Ort selbst beschichtet werden können. Der Transport und die Beschichtung von einzelnen Segmenten sind wesentlich einfacher und schneller durchführbar. Darüber hinaus kann jeweils ein Satz von neu beschichteten Segmenten, d. h. für eine komplette Lauffläche als Vorrat angelegt werden, so dass jeweils ein schneller Austausch der verbrauchten gegen die neu beschichteten Segmente vorgenommen werden kann. Dadurch kann der Reifenprüfstand nach kurzer Unterbrechung wieder in Betrieb genommen werden, so dass die Nutzungsdauer des Prüfstandes erhöht wird. Ein weiterer Vorteil der Segmentbauweise besteht darin, dass das Massenträgheitsmoment des aus der Lauftrommel und den Segmente bestehenden Aufbaus im Vergleich zu bekannten Reifenprüfständen tendenziell geringer wird. Da die Lauftrommel im Prüfbetrieb regelmäßig auch beschleunigt und verzögert wird, ergibt sich somit ein vergleichsweise geringerer Energiebedarf.

Erfindungsgemäß ist weiterhin vorgesehen, dass die Seitenscheiben in ihrem Umfangsbereich Materialverdickungen oder Querschnittserweiterungen aufweisen, welche als Befestigungsbereiche dienen. Die Befestigungsbereiche der Seitenscheiben weisen erfindungsgemäß auf ihrem Umfang erste zylindrische Fügeflächen auf, welche mit zweiten zylindrischen Fügeflächen, welche an der Innenseite der Segmente angebracht sind, korrespondieren. Dadurch ergibt sich ein passgenaues Fügen.

Erfindungsgemäß ist weiterhin vorgesehen, dass in den Verdickungen radial ausgerichtete erste Befestigungsbohrungen und in den zweiten Fügeflächen der Segmente fluchtende zweite Befestigungsbohrungen angeordnet sind. Die Längsachsen der Befestigungsbohrungen liegen im Bereich der Mittelebenen der Seitenscheiben. Die Segmente werden über Befestigungsschrauben, welche in die ersten und zweiten Befestigungsbohrungen eingesetzt sind, direkt mit den Seitenscheiben verbunden. Dabei werden die über die Befestigungsschrauben eingeleiteten Zentrifugalkräfte direkt in den Bereich der Mittelebenen der Seitenscheiben eingeleitet. Durch die Befestigung der Segmente entstehen damit im Wesentlichen nur Zugkräfte und keine Biegemomente. Damit wird die Beanspruchung der Seitenscheiben relativ gering gehalten.

Nach einer weiteren bevorzugten Ausführungsform sind zwischen den Seitenscheiben Versteifungselemente, welche bevorzugt als Rippen oder Rippenbleche ausgebildet sind, angeordnet. Die Rippen sind mit den Seitenscheiben und bevorzugt auch mit der Nabe fest verbunden. Damit wird der Vorteil erreicht, dass die Seitenscheiben stabil und maßgerecht auf der Nabe angeordnet sind, was für die Montage und Demontage der Segmente wichtig ist.

Nach einer weiteren bevorzugten Ausführungsform weisen die einzelnen Segmente etwa die Form eines Parallelogramms auf, d. h. sie weisen parallele Längskanten und parallele, jedoch schräg zur Achsrichtung verlaufende Stoßkanten auf. Damit wird der Vorteil erreicht, dass beim Abrollen des Reifens auf der Lauffläche der Lauftrommel keine Stöße und damit verbundene Geräusche auftreten, vielmehr wird das Abrollverhalten geschmeidiger. Zwischen den Stoßkanten ist ein minimaler Dehnspalt belassen, um beim Betrieb der Lauftrommel auftretende Dehnungen in Umfangsrichtung zu kompensieren.

Nach einer weiteren bevorzugten Ausführungsform weisen die Segmente eine äußere im Wesentlichen glatte Oberfläche auf, welche mit einem Belag beschichtbar ist.

Die äußere Oberfläche mit dem Belag simuliert die Fahrbahn, auf welcher der Reifen abrollt. Der Belag unterliegt dem Verschleiß und wird daher von Zeit zu Zeit erneuert. Das Aufbringen einer neuen Beschichtung auf einem Segment ist relativ komfortabel im Vergleich zur Beschichtung einer kompletten Lauftrommel. Die Beschichtung der Segmente im ausgebauten Zustand kann daher auch vor Ort vom Betreiber selbst mit geeigneten Vorrichtungen durchgeführt werden. Darüber hinaus besteht auch die Möglichkeit, nur einzelne abgenutzte oder beschädigte Segmente auszubauen und neu zu beschichten.

Nach einer weiteren bevorzugten Ausführungsform sind die Segmente auf ihrer Innenseite verrippt, d. h. sie weisen eine im Wesentlichen radial ausgerichtete Rippenstruktur auf, welche das Widerstandsmoment der Segmente, welche durch die Anpresskraft der Reifen belastet werden, erhöhen und gleichzeitig das Massenträgheitsmoment der Lauftrommel gering halten. Bevorzugt sind die Segmente aus Stahlplatten hergestellt, bei welchen die Verrippung auf der Innenseite spangebend hergestellt werden kann.

Nach einer weiteren bevorzugten Ausführungsform kann die Lauftrommel mittels ihrer Nabe auf einer Antriebswelle befestigt und durch diese angetrieben werden. Die Antriebswelle überträgt einerseits die aus den Reifenanpresskräften resultierenden Lagerkräfte und andererseits die für den Prüfbetrieb erforderliche Antriebsleistung auf die Lauftrommel.

Nach einer weiteren bevorzugten Ausführungsform sind radial innerhalb der ersten Befestigungsbohrungen in den Seitenscheiben Durchbrüche angeordnet, welche als Montageöffnungen beim Montieren der Befestigungsschrauben dienen. Letztere werden von innen nach außen durchgesteckt, d. h. zunächst durch die ersten als Durchgangsbohrungen ausgebildeten Befestigungsbohrungen und dann in die zweiten als Sacklochgewindebohrung ausgebildeten Befestigungsbohrungen eingeschraubt. Die Montageöffnungen bieten genügend Platz, um einen entsprechendes Drehwerkzeug anzusetzen.

Nach einer weiteren alternativen Ausführungsform kann der Befestigungsbereich auch als Ringflansch ausgebildet sein, welcher seitlich von den Seitenscheiben absteht und somit eine zylindrische Ringfläche bildet. Auf dieser Ringfläche, welche als Fügefläche für die Segmente dient, werden die Segmente montiert und befestigt.

Gemäß einer weiteren bevorzugten Ausführungsform besteht die Lauftrommel aus Stahl oder Aluminium. Ebenso bevorzugt bestehen auch die Segmente aus Stahl oder Aluminium. Dabei ist es möglich, aber nicht notwendig, dass sowohl die Lauftrommel als auch die Segmente aus demselben Material bestehen. Beispielsweise kann die Lauftrommel aus Stahl bestehen und die Segmente aus Aluminium.

Sofern die Lauftrommel bzw. die Segmente aus Aluminium bestehen, so werden diese bevorzugt mittels eines Gussverfahrens hergestellt.

Gemäß einer weiteren bevorzugten Ausführungsform weisen die Segmente eine fahrbahngetreue Oberflächenstruktur auf. Diese Oberflächenstruktur kann z.B. bei der Herstellung der Segmente, insbesondere während eines Gießens der Segmente, in die Oberfläche der Segmente eingearbeitet werden. In diesem Fall weisen die Segmente also eine homogene Materialstruktur auf, z.B. Aluminium oder Stahl.

Alternativ können die Segmente aber zunächst auch mit einer ausgießbaren Vertiefung an ihrer Oberfläche hergestellt werden, welche zur Bildung der fahrbahngetreuen Oberflächenstruktur später beispielsweise mit einem Epoxidharz-Kies-Gemisch ausgegossen wird. In diesem Fall weisen die Segmente also keine homogene Materialstruktur auf, da sie aus dem genannten Epoxidharz-Kies-Gemisch sowie aus z.B. Aluminium oder Stahl bestehen.

Ausführungsbeispiele der Erfindung sind in der Zeichnung dargestellt und werden im Folgenden näher beschrieben, wobei sich aus der Beschreibung und/oder der Zeichnung weitere Merkmale und/oder Vorteile ergeben können. Es zeigen
- Fig. 1: einen Axialschnitt einer erfindungsgemäßen Lauftrommel ohne Lauffläche,
- Fig. 1a: die Lauftrommel gemäß Fig. 1 in einer 3-D-Darstellung,
- Fig. 2: ein Segment der Lauftrommel in einer Draufsicht,
- Fig. 2a: einen Axialschnitt des Segments in der Ebene IIa-IIa gemäß Fig. 2,
- Fig. 2b: einen Radialschnitt des Segments in der Ebene Ilb-Ilb gemäß Fig. 2a,
- Fig. 3: einen halben Axialschnitt der Lauftrommel mit montierten Segmenten,
- Fig. 3a: eine Einzelheit Z aus Fig. 3,
- Fig. 3b: einen Teilschnitt in der Schnittebene Illb-Illb in Fig. 3,
- Fig. 4: eine 3-D-Darstellung der Lauftrommel mit teilweise abgenommenen Segmenten und
- Fig. 5: eine zweite Ausführungsform der Erfindung mit einer Ringflanschbefestigung der Segmente.

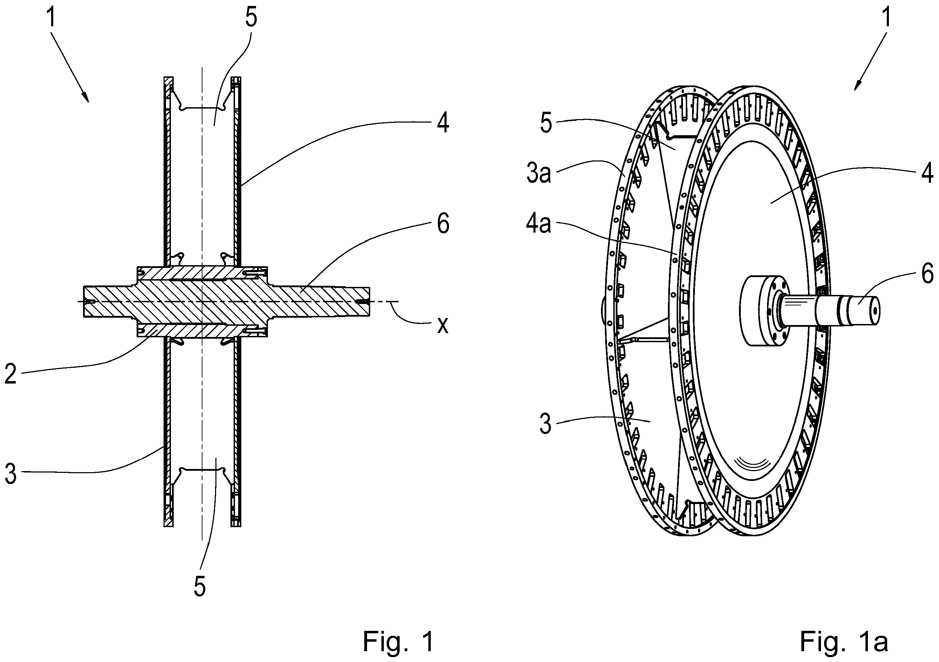

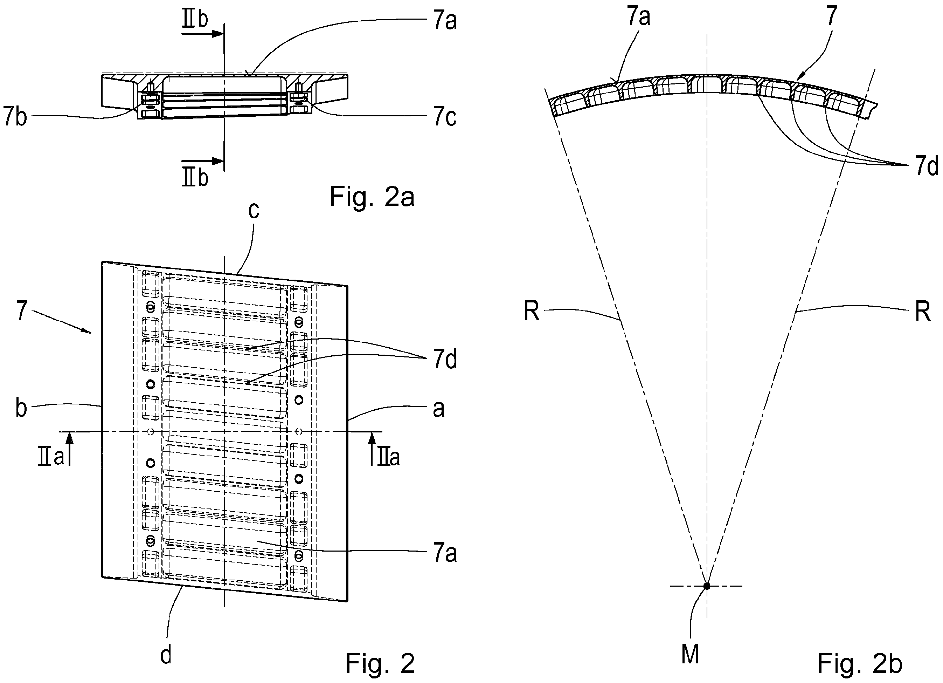

Fig. 1 zeigt in einem Axialschnitt eine erfindungsgemäße Lauftrommel 1 - ohne hier nicht dargestellte Segmente (vgl. Fig. 2). Die in Fig. 1 dargestellte (unvollständige) Lauftrommel 1 umfasst eine Nabe 2, auf welcher zwei parallel und im Abstand zueinander angeordnete Seitenscheiben 3, 4 befestigt sind. Zwischen den beiden Seitenscheiben 3, 4 sind als Rippen oder Rippenbleche 5 ausgebildete Versteifungselemente angeordnet, welche sowohl mit den Seitenscheiben 3, 4 als auch optional mit dem Umfang der Nabe 2 verbunden sind. Die Nabe 2 ist drehfest und in axialer Richtung fixiert auf einer Antriebswelle 6 mit der Drehachse x angeordnet.

Fig. 1a zeigt die Lauftrommel 1 in einer 3-D-Darstellung, wobei die beiden parallel zueinander angeordneten Seitenscheiben 4, 5, die Rippenbleche 5 und die Antriebswelle 6 erkennbar sind. Die Seitenscheiben 3, 4 weisen auf ihrem Umfang jeweils erste zylindrische Fügeflächen 3a, 4a auf.

Fig. 2 zeigt ein erfindungsgemäßes Segment 7 in einer Draufsicht, d. h. in Richtung auf die Drehachse der Lauftrommel. Das Segment 7 weist die Form eines Parallelogramms mit zwei parallelen, in Umfangsrichtung verlaufenden Längskanten a, b sowie zwei schräg zur Achsrichtung verlaufenden Stoßkanten c, d auf. Der Schrägungswinkel kann etwa 5 bis 10 Grad in Bezug auf die Drehachse betragen. Das Segment 7 weist auf seiner Außenseite, der Laufseite, eine im Wesentlichen glatte Oberfläche 7a auf, auf welcher eine nicht dargestellte, vorzugsweise metallische Beschichtung aufgebracht werden kann. Die Beschichtung kann eine spezielle Oberflächenstruktur aufweisen, welche die Fahrbahn simuliert.

Gemäß einem weiteren, in den Figuren nicht dargestellten Ausführungsbeispiel, sind die Stoßkanten c, d orthogonal zu den Längskanten a, b.

Fig. 2a zeigt das Segment 7 in einem Axialschnitt in der Ebene IIa-IIa in Fig. 2. Aus der Zeichnung ist ersichtlich, dass die beschichtbare Oberfläche 7a in dieser Schnittebene im Wesentlichen gerade verläuft. Auf der der Drehachse zugewandten Seite des Segments 7, der Innenseite, sind zweite zylindrische Fügeflächen 7b, 7c angeordnet, welche mit den ersten zylindrischen Fügeflächen 3a, 4a (Fig. 1a) korrespondieren.

Fig. 2b zeigt einen Radialschnitt in der Ebene Ilb-Ilb in Fig. 2a, d. h. im mittleren Bereich des Segments 7. Die Oberfläche 7a des Segments 7 ist - wie aus der Darstellung ersichtlich - gekrümmt, und zwar mit einem Radius R, welcher dem Radius der Lauftrommel entspricht. Der Durchstoßpunkt der Drehachse der Lauftrommel durch die Zeichenebene ist in Fig. 2b mit M bezeichnet. Die Innenseite, d. h. die dem Mittelpunkt M zugewandte Seite des Segments 7 weist eine Verrippung 7d auf, wobei die einzelnen Rippen im Wesentlichen radial und - wie Fig. 2 in gestrichelter Linie zeigt - schräg zur Axialrichtung ausgerichtet sind, d. h. parallel zu den Stoßkanten c, d verlaufen. Durch die Verrippung 7d wird einerseits ein geringes Gewicht und andererseits ein hohes Widerstandsmoment gegen Durchbiegung des Segments 7 erreicht.

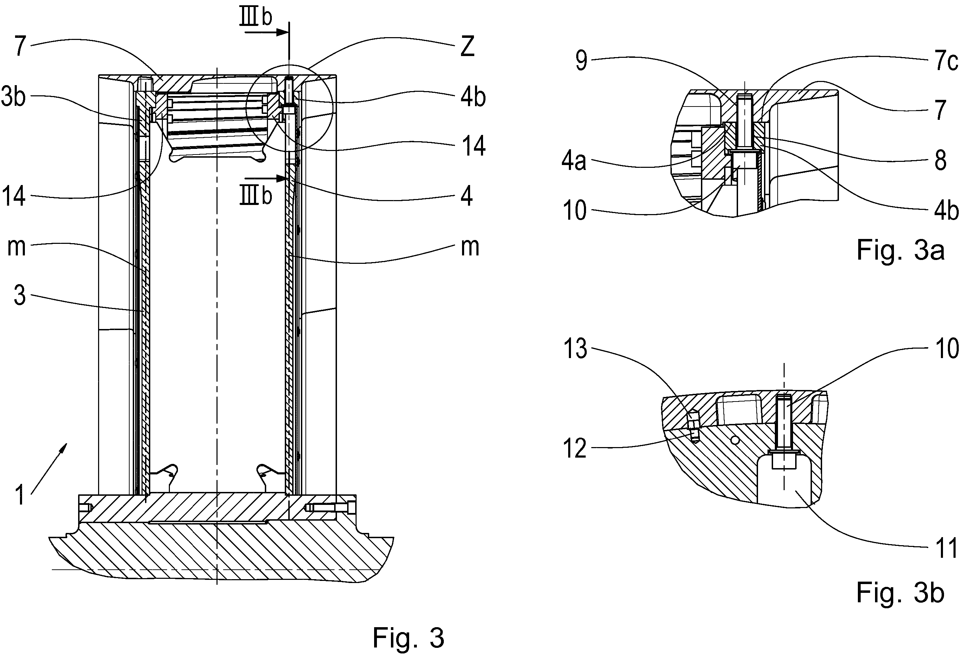

Fig. 3 zeigt die Lauftrommel 1 in einem Halbaxialschnitt in fertig montiertem Zustand, d. h. mit an den Seitenscheiben 3, 4 befestigten Segmenten 7. Die Seitenscheiben 3, 4 weisen in ihrem äußeren Umfangsbereich als Materialverdickungen ausgebildete Befestigungsbereiche 3b, 4b auf, welche einerseits als Einzelheit Z in Fig. 3a und andererseits als Teilschnitt in der Ebene Illb-Illb in Fig. 3b vergrößert dargestellt sind. In den Befestigungsbereichen 3b, 4b sind erste radial verlaufende Befestigungsbohrungen 8, ausgebildet als Durchgangsbohrungen, angeordnet, während, fluchtend zu den ersten Befestigungsbohrungen 8, in den Segmenten 7 zweite Befestigungsbohrungen 9, ausgebildet als Sacklochbohrungen, angeordnet sind. Die Segmente 7 werden über Befestigungsschrauben 10, welche in den ersten und zweiten Befestigungsbohrungen 8, 9 angeordnet sind, mit den Seitenscheiben 3, 4 verbunden, wobei die ersten und zweiten zylindrischen Fügeflächen 4a, 7c passgenau aufeinander liegen. Die Darstellung der Befestigung gemäß Fig. 3a gilt für beide Seitenscheiben 3, 4 in gleicher Weise. An den Innenseiten der Seitenscheiben 3, 4 sind Wuchtgewichte 14 angeordnet, durch welche die Lauftrommel 1 weitestgehend ausgewuchtet ist, bevor die Segmente 7 montiert werden.

Die Seitenscheiben 3, 4 weisen, in radialer Richtung gesehen, etwa eine konstante Wandstärke mit einer Mittelebene m auf. Wie aus Fig. 3 und Fig. 3a ersichtlich, sind die als Materialverdickungen ausgebildeten Befestigungsbereiche 3b, 4b etwa symmetrisch zur Mittelebene m der Seitenscheiben 3, 4 angeordnet. Dies hat zur Folge, dass auch die Längsachsen der Befestigungsschrauben 10 etwa in die Mittelebene m fallen. Die im Betrieb auftretenden Zentrifugalkräfte werden somit direkt in den Querschnitt der Seitenwände 3, 4 eingeleitet, Biegemomente und daraus resultierende Biegebeanspruchungen des Materials werden somit vermieden.

In Fig. 3b ist radial innerhalb der Befestigungsschraube 10 in der Seitenscheibe 4 ein Durchbruch 11 erkennbar, welcher als Montageöffnung zum Ansetzen eines Werkzeuges für die Befestigungsschraube 10 dient. Wie aus der Zeichnung ersichtlich, werden die Befestigungsschrauben 10 von innen nach außen eingesetzt und festgezogen. Zur genauen Positionierung der Segmente 7 auf den Seitenscheiben 3, 4 sind Passelemente, vorzugsweise in Passbohrungen angeordnete Passstifte vorgesehen: in Fig. 3b sind ein solcher Passstift 12 und eine zugehörige Passbohrung 13 dargestellt.

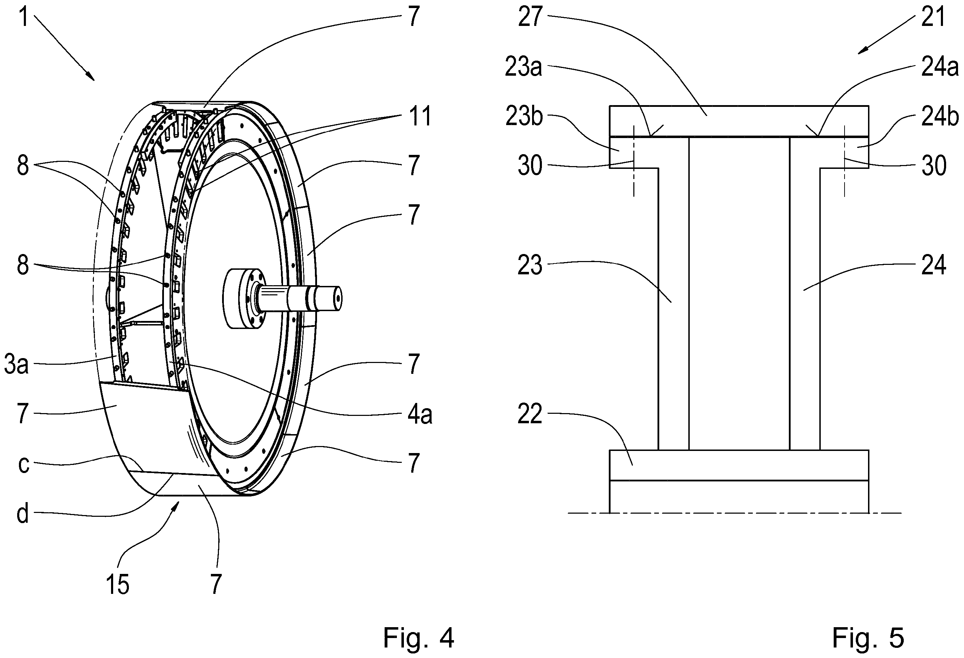

Fig. 4 zeigt die Lauftrommel 1 mit unvollständiger Lauffläche 15, die durch eine Vielzahl von in Umfangsrichtung angeordneten Segmenten 7 gebildet wird - hier sind zur Verbesserung der Darstellung einige Segmente weggelassen. Bei einer bevorzugten Ausführungsform der Lauftrommel 1, welche etwa einen Durchmesser von 2 m haben kann, sind zehn Segmente 7 auf dem Umfang vorgesehen, drei davon sind - aus darstellerischen Gründen - weggelassen. Auf den freigelegten ersten zylindrischen Fügeflächen 3a, 4a sind die über den Umfang verteilt angeordneten ersten Befestigungsbohrungen 8 erkennbar sowie wie zugehörigen Durchbrüche 11. Die Durchbrüche 11 können nach der Montage, z. B. zur Vermeidung von Geräuschen abgedeckt werden. Zwischen den schräg verlaufenden Stoßkanten c, d sind nicht dargestellte minimale Dehnspalte belassen.

Die Lauftrommel 1 wird bevorzugt bei einem nicht dargestellten Reifen- und/oder Fahrwerksprüfstand zur Simulation der Fahrbahn eingesetzt. Die Lauftrommel 1 weist eine aus Segmenten 7 zusammengesetzt Lauffläche 15 auf, auf welcher ein zu prüfender Reifen (nicht dargestellt) abrollt. Um Stöße beim Übergang von Segment zu Segment zu vermeiden, sind die Stoßkanten c, d schräg zur Abrollrichtung angeordnet. Die Oberfläche 7a der Segmente 7 ist für die Durchführung des Prüfvorganges beschichtet, wobei die Beschichtung zur Simulation der Fahrbahn eine bestimmte Oberflächenstruktur aufweist. Aufgrund der hohen Radaufstandskräfte unterliegt die Beschichtung dem Verschleiß und muss daher regelmäßig erneuert werden. Dies geschieht erfindungsgemäß durch Demontage der Segmente 7, die dann einzeln beschichtet und anschließend wieder zu einer komplett erneuerten Lauffläche mit den Seitenscheiben gefügt werden.

Fig. 5 zeigt als zweites Ausführungsbeispiel der Erfindung eine Lauftrommel 21 als Halbschnitt in schematischer Darstellung, wobei für gleiche oder analoge Teile gleiche, jedoch um 20 erhöhte Bezugszahlen wie in den Figuren zuvor verwendet werden. Auf einer Nabe 22 sind zwei Seitenscheiben 23, 24 befestigt, welche als Ringflansche ausgebildete Befestigungsbereiche 23b, 24b aufweisen, welche rechtwinklig von den Seitenwänden 23, 24 abragen und erste zylindrische Fügeflächen 23a, 24a bilden. Ein Segment 27, welches korrespondierende zweite Fügeflächen (ohne Bezugszahl) aufweist, wird über die Ringflansche 23b, 24b und schematisch dargestellte Befestigungsschrauben 30 mit den Seitenscheiben 23, 24 verbunden.

### Bezugszeichen

- 1: Lauftrommel
- 2: Nabe
- 3: Seitenscheibe
- 3a: erste zylindrische Fügefläche
- 3b: Befestigungsbereich
- 4: Seitenscheibe
- 4a: erste zylindrische Fügefläche
- 4b: Befestigungsbereich
- 5: Rippenblech
- 6: Antriebswelle
- 7: Segment
- 7a: Oberfläche, außen
- 7b: zweite zylindrische Fügefläche
- 7c: zweite zylindrische Fügefläche
- 7d: Verrippung
- 8: erste Befestigungsbohrung
- 9: zweite Befestigungsbohrung
- 10: Befestigungsschraube
- 11: Durchbruch
- 12: Passstift
- 13: Passbohrung
- 14: Wuchtgewicht
- 15: Lauffläche

- 21: Lauftrommel
- 22: Nabe
- 23: Seitenscheibe
- 23a: erste zylindrische Fügefläche
- 23b: Befestigungsbereich
- 24: Seitenscheibe
- 24a: erste zylindrische Fügefläche
- 24b: Befestigungsbereich

- a: Längskante
- b: Längskante
- c: Stoßkante
- d: Stoßkante
- m: Mittelebene
- x: Drehachse
- M: Mittelpunkt
- R: Radius
- Z: Einzelheit

## Patentansprüche

1. Lauftrommel eines Reifen-, Rad- und/oder Fahrwerksprüfstandes mit einer zylindrischen Lauffläche (15), umfassend
- eine Nabe (2, 22),
- auf der Nabe (2, 22) angeordnete Seitenscheiben (3, 4, 23, 24), welche im Bereich ihres Umfanges Befestigungsbereiche (3b, 4b, 23b, 24b) aufweisen, sowie
- eine Vielzahl von Segmenten (7, 27), welche die Lauffläche (15) der Lauftrommel (1, 21) bilden, auf dem Umfang der Befestigungsbereiche (3b, 4b. 23b, 24b) angeordnet und mit den Seitenscheiben (3, 4, 23, 24) verbunden sind,
**dadurch gekennzeichnet, dass** die Befestigungsbereiche (3b, 4b, 23b, 24b) als Verdickungen (3b, 4b) der Seitenscheiben (3, 4) ausgebildet sind,
wobei die Befestigungsbereiche (3b, 4b, 23b, 24b) jeweils eine erste zylindrische Fügefläche (3a, 4a, 23a, 24a) für die Befestigung der Segmente (7, 27) aufweisen,
wobei in den Verdickungen (3b, 4b) radial ausgerichtete erste Befestigungsbohrungen (8) angeordnet sind,
wobei die Segmente (7) zweite, mit den ersten Fügeflächen (3a, 4a) korrespondierende zylindrische Fügeflächen (7b, 7c) aufweisen,
wobei im Bereich der zweiten Fügeflächen (7b, 7c) zweite, mit den ersten Befestigungsbohrungen (8) fluchtende Befestigungsbohrungen (9) angeordnet sind und
wobei die Segmente (7) über Befestigungsschrauben (10), welche in den ersten und zweiten Befestigungsbohrungen (8, 9) angeordnet sind, mit den Seitenscheiben (3, 4) verbunden sind.

2. Lauftrommel nach Anspruch 21, **dadurch gekennzeichnet, dass** die Seitenscheiben (3, 4) eine senkrecht zur Drehachse (x) angeordnete Mittelebene (m) aufweisen und dass die Verdickungen (3b, 4b) etwa symmetrisch zur Mittelebene (m) ausgebildet ist.

3. Lauftrommel nach Anspruch 2, **dadurch gekennzeichnet, dass** die Längsachsen der ersten Befestigungsbohrungen (8) im Bereich der Mittelebene (m) angeordnet sind.

4. Lauftrommel nach einem der Ansprüche 1 bis 3, **dadurch gekennzeichnet, dass** zwischen den Seitenscheiben (3, 4) Versteifungselemente (5) angeordnet sind.

5. Lauftrommel nach Anspruch 4, **dadurch gekennzeichnet, dass** die Versteifungselemente als Rippen (5) ausgebildet sind, die über den Umfang verteilt angeordnet und mit den Seitenscheiben (3, 4) oder mit den Seitenscheiben (3, 4) und der Nabe (2) verbunden sind.

6. Lauftrommel nach einem der Ansprüche 1 bis 5, **dadurch gekennzeichnet, dass** die Segmente (7) in Umfangsrichtung verlaufende Längskanten (a, b) und schräg zur Richtung der Drehachse (x) verlaufende Stoßkanten (c, d) aufweisen.

7. Lauftrommel nach einem der Ansprüche 1 und 6, **dadurch gekennzeichnet, dass** die Segmente (7) mittels Passstiften (12) respektive Passbohrungen (13) auf den Seitenscheiben (3, 4) fixierbar sind.

8. Lauftrommel nach einem der Ansprüche 1 und 6 bis 7, **dadurch gekennzeichnet, dass** die Segmente (7) auf dem Umfang der Lauffläche (15) Stoßkante (c) an Stoßkante (d) unter Belassung eines Dehnspaltes angeordnet sind.

9. Lauftrommel nach einem der Ansprüche 1 und 6 bis 8, **dadurch gekennzeichnet, dass** die Segmente (7) eine äußere, glatte Oberfläche (7a) aufweisen, welche mit einem Belag beschichtbar ist.

10. Lauftrommel nach einem der Ansprüche 1 und 6 bis 9, **dadurch gekennzeichnet, dass** die Segmente (7) auf ihrer der Drehachse (x) zugewandten Seite eine Verrippung (7d) aufweisen.

11. Lauftrommel nach einem der vorhergehenden Ansprüche, **dadurch gekennzeichnet, dass** die Nabe (2) auf einer Antriebswelle (6) befestigbar sind.

12. Lauftrommel nach einem der Ansprüche 1 bis 11, **dadurch gekennzeichnet, dass** in den Seitenscheiben (3, 4) radial innerhalb der ersten Befestigungsbohrungen (8) als Durchbrüche (11) ausgebildete Montageöffnungen angeordnet sind.

13. Lauftrommel nach Anspruch 1, **dadurch gekennzeichnet, dass** die Befestigungsbereiche (3b, 4b, 23b, 24b) als von den Seitenscheiben (23, 24) abragende Ringflansche (23b, 24b) ausgebildet sind.

14. Lauftrommel nach Anspruch 13, **dadurch gekennzeichnet, dass** die Segmente (7) an den Ringflanschen (23b, 24b) befestigt sind.

## Claims

1. Running drum of a tyre, wheel and/or chassis test stand, having a cylindrical running surface (15) and comprising:
- a hub (2, 22),
- side discs (3, 4, 23, 24) which are arranged on the hub (2, 22) and which have in the region of their circumference fastening regions (3b, 4b, 23b, 24b),
and
- a multiplicity of segments (7, 27) which form the running surface (15) of the running drum (1, 21), which are arranged on the circumference of the fastening regions (3b, 4b, 23b, 24b) and which are connected to the side discs (3, 4, 23, 24),
**characterized in that** the fastening regions (3b, 4b, 23b, 24b) are in the form of thickenings (3b, 4b) of the side discs (3, 4),
wherein the fastening regions (3b, 4b, 23b, 24b) each have a first cylindrical joining surface (3a, 4a, 23a, 24a) for the fastening of the segments (7, 27),
wherein radially oriented first fastening bores (8) are arranged in the thickenings (3b, 4b),
wherein the segments (7) have second cylindrical joining surfaces (7b, 7c) which correspond to the first joining surfaces (3a, 4a),
wherein second fastening bores (9) aligned with the first fastening bores (8) are arranged in the region of the second joining surfaces (7b, 7c), and
wherein the segments (7) are connected to the side discs (3, 4) via fastening screws (10) which are arranged in the first and second fastening bores (8, 9).

2. Running drum according to Claim 21, **characterized in that** the side discs (3, 4) have a central plane (m) which is positioned perpendicularly to the axis of rotation (x), and **in that** thickenings (3b, 4b) are formed approximately symmetrically with respect to the central plane (m).

3. Running drum according to Claim 2, **characterized in that** the longitudinal axes of the first fastening bores (8) are positioned in the region of the central plane (m) .

4. Running drum according to one of Claims 1 to 3, **characterized in that** stiffening elements (5) are arranged between the side discs (3, 4).

5. Running drum according to Claim 4, **characterized in that** the stiffening elements are in the form of ribs (5) which are arranged distributed over the circumference and which are connected to the side discs (3, 4) or to the side discs (3, 4) and the hub (2).

6. Running drum according to one of Claims 1 to 5, **characterized in that** the segments (7) have longitudinal edges (a, b) extending in a circumferential direction and have abutment edges (c, d) extending obliquely to the direction of the axis of rotation (x).

7. Running drum according to one of Claims 1 to 6, **characterized in that** the segments (7) are fixable by means of locating pins (12) or locating bores (13) on the side discs (3, 4).

8. Running drum according to one of Claims 1, 6 and 7, **characterized in that** the segments (7) are arranged abutment edge (c) to abutment edge (d), with an expansion gap left, on the circumference of the running surface (15) .

9. Running drum according to one of Claims 1 and 6 to 8, **characterized in that** the segments (7) have an outer, smooth surface (7a) which is able to be coated with a coating.

10. Running drum according to one of Claims 1 and 6 to 9, **characterized in that** the segments (7) have a rib formation (7d) on their side facing towards the axis of rotation (x).

11. Running drum according to one of the preceding claims, **characterized in that** the hub (2) is fastenable on a drive shaft (6).

12. Running drum according to one of Claims 1 to 11, **characterized in that** mounting openings in the form of apertures (11) are arranged in the side discs (3, 4) radially inside the first fastening bores (8).

13. Running drum according to Claim 1, **characterized in that** the fastening regions (3b, 4b, 23b, 24b) are in the form of annular flanges (23b, 24b) which project from the side discs (23, 24).

14. Running drum according to Claim 13, **characterized in that** the segments (7) are fastened on the annular flanges (23b, 24b).

## Revendications

1. Tambour de roulement d'un banc d'essai de pneu, de roue et/ou de train roulant comportant une surface de roulement (15) cylindrique, comprenant
- un moyeu (2, 22),
- des disques latéraux (3, 4, 23, 24) disposés sur le moyeu (2, 22), lesquels présentent des régions de fixation (3b, 4b, 23b, 24b) dans la région de leur circonférence, et
- une pluralité de segments (7, 27), lesquels forment la surface de roulement (15) du tambour de roulement (1, 21), sont disposés au niveau de la circonférence des régions de fixation (3b, 4b, 23b, 24b) et sont reliés aux disques latéraux (3, 4, 23, 24),
**caractérisé en ce que** les régions de fixation (3b, 4b, 23b, 24b) sont réalisées sous forme d'épaississements (3b, 4b) des disques latéraux (3, 4),
les régions de fixation (3b, 4b, 23b, 24b) présentant respectivement une première surface de jonction (3a, 4a, 23a, 24a) cylindrique pour la fixation des segments (7, 27),
des premiers alésages de fixation (8) orientés radialement étant disposés dans les épaississements (3b, 4b),
les segments (7) présentant des deuxièmes surfaces de jonction (7b, 7c) cylindriques correspondant aux premières surfaces de jonction (3a, 4a),
des deuxièmes alésages de fixation (9) alignés sur les premiers alésages de fixation (8) étant disposés dans la région des deuxièmes surfaces de jonction (7b, 7c) et
les segments (7) étant reliés aux disques latéraux (3, 4) par le biais de vis de fixation (10), lesquelles sont disposées dans les premiers et les deuxièmes alésages de fixation (8, 9).

2. Tambour de roulement selon la revendication 1, **caractérisé en ce que** les disques latéraux (3, 4) présentent un plan central (m) disposé perpendiculairement à l'axe de rotation (x) et **en ce que** les épaississements (3b, 4b) sont réalisés approximativement symétriquement par rapport au plan central (m).

3. Tambour de roulement selon la revendication 2, **caractérisé en ce que** les axes longitudinaux des premiers alésages de fixation (8) sont disposés dans la région du plan central (m).

4. Tambour de roulement selon l'une des revendications 1 à 3, **caractérisé en ce que** des éléments de raidissement (5) sont disposés entre les disques latéraux (3, 4).

5. Tambour de roulement selon la revendication 4, **caractérisé en ce que** les éléments de raidissement sont réalisés sous forme de nervures (5) qui sont disposées de manière répartie sur la circonférence et sont reliées aux disques latéraux (3, 4) ou aux disques latéraux (3, 4) et au moyeu (2).

6. Tambour de roulement selon l'une des revendications 1 à 5, **caractérisé en ce que** les segments (7) présentent des bords longitudinaux (a, b) s'étendant dans la direction circonférentielle et des bords de butée (c, d) s'étendant de manière oblique par rapport à la direction de l'axe de rotation (x).

7. Tambour de roulement selon l'une des revendications 1 et 6, **caractérisé en ce que** les segments (7) peuvent être fixés sur les disques latéraux (3, 4) au moyen de goupilles de positionnement (12) respectivement d'alésages de positionnement (13).

8. Tambour de roulement selon l'une des revendications 1 et 6 et 7, **caractérisé en ce que** les segments (7) sont disposés sur la circonférence de la surface de roulement (15), bord de butée (c) contre bord de butée (d), en laissant un interstice de dilatation.

9. Tambour de roulement selon l'une des revendications 1 et 6 à 8, **caractérisé en ce que** les segments (7) présentent une surface (7a) extérieure lisse, laquelle peut être revêtue d'un revêtement.

10. Tambour de roulement selon l'une des revendications 1 et 6 à 9, **caractérisé en ce que** les segments (7) présentent un nervurage (7d) sur leur côté tourné vers l'axe de rotation (x).

11. Tambour de roulement selon l'une des revendications précédentes, **caractérisé en ce que** le moyeu (2) peut être fixé sur un arbre d'entraînement (6).

12. Tambour de roulement selon l'une des revendications 1 à 11, **caractérisé en ce que** des ouvertures de montage réalisées sous forme de passages (11) sont disposées radialement à l'intérieur des premiers alésages de fixation (8) dans les disques latéraux (3, 4).

13. Tambour de roulement selon la revendication 1, **caractérisé en ce que** les régions de fixation (3b, 4b, 23b, 24b) sont réalisées sous forme de rebords annulaires (23b, 24b) faisant saillie à partir des disques latéraux (23, 24).

14. Tambour de roulement selon la revendication 13, **caractérisé en ce que** les segments (7) sont fixés aux rebords annulaires (23b, 24b).
